# EUROPEAN PATENT SPECIFICATION

(11) **EP 3 007 449 B1**
(45) Date of publication and mention of the grant of the patent: **10.11.2021**
(21) Application number: 15184956.9
(22) Date of filing: 11.09.2015
(51) Int. Cl.: H04N 21/2343

(54) **PROTECTED STORAGE OF CONTENT WITH TWO COMPLEMENTARY MEMORIES**
GESCHÜTZTE DATENSPEICHERUNG MIT ZWEI SICH ERGÄNZENDEN SPEICHERN
ENREGISTREMENT PROTÉGÉ DES DONNÉES AVEC DEUX MÉMOIRES COMPLÉMENTAIRES

(30) Priority: 07.10.2014 KR 20140135164
(43) Date of publication of application: 13.04.2016
(73) Proprietor: Samsung Electronics Co., Ltd., Gyeonggi-do 16677 (KR)
(72) Inventor: PARK, Chan-sub, Incheon (KR)
(74) Representative: Hewett, Jonathan Michael Richard

(56) References cited:
- WO-A1-00/31964
- CA-A1- 2 466 482
- US-A1- 2009 132 776
- None

## Description

The present invention relates to a content processing apparatus and a content processing method thereof, and more particularly, to a content processing apparatus which can utilize a storage space of an external storage when storing content, and also, can enhance security of content, and a content processing method thereof.

As the amount of content has increased and communication technology has improved, devices that use content, such as smartphones and the like, can experience a lack of sufficient storage space to store the content. To address such storage limitations, a network storage service that stores various contents remotely in a server and allows an electronic device such as a smartphone to download the contents from the server anywhere and at any time has been increasingly provided in recent years.

However, compared with the internal storage of the device, the above-described network storage service has difficulty in providing contents on a real time basis due to accessibility delays and network bandwidth limitations. In addition, since the server may be commonly used by others in many cases, a content security-related problem may arise, and in particular, there may be a problem that contents protected by a copyright are illegally distributed.

Therefore, there is a demand for a method for storing contents without causing problems such as a limited storage capacity, security vulnerability, copyright infringement, or the like.

Canadian Patent Application CA 2,466,482 presents file splitting, scalable coding and asynchronous transmission in streamed data transfer.

International Patent Application WO 00/31964 presents a method and a device for encrypting images.

United States Patent Application US 2009/0132776 discloses a data processing device for processing stream data composed of a plurality of frames.

In a first aspect of the invention, claim 1 provides a content processing apparatus.

In a second aspect of the invention, claim 2 provides a content processing method of a content processing apparatus.

Optional features are set out in the dependent claims.

The above and/or other aspects will be more apparent from the following description of exemplary embodiments taken in conjunction with the accompanying drawings, in which:
FIG. 1 is a view to illustrate a content storage system according to an exemplary embodiment;
FIG. 2 is a view to illustrate a configuration of a content processing apparatus according to various exemplary embodiments;
FIGs. 3 to 6 are views to illustrate a method for dividing contents according to various examples not falling within the scope of the claims, and an embodiment of the present invention;
FIG. 7 is a view to illustrate a preview screen which is provided in a content processing apparatus according to an example not falling within the scope of the claims;
FIGs. 8 to 9 are views to illustrate a content processing method of a content processing apparatus according to an embodiment of the present invention and an example not falling within the scope of the claims, respectively;
FIG. 10 is a view to illustrate a configuration of a content processing apparatus according to another exemplary embodiment; and
FIGs. 11 to 12 are views to illustrate a UI screen for controlling a content processing apparatus according to various exemplary embodiments.

Although specific embodiments of the present invention are illustrated in the drawings and relevant detailed descriptions are provided, various changes can be made and various exemplary embodiments may be provided. Accordingly, the present invention is not limited to the specific embodiments and should be construed as including all changes and/or equivalents or substitutes falling within the scope of the claims. In the following description, well-known functions or constructions are not described in detail since they would obscure the disclosure in unnecessary detail

Although the terms such as "first" and "second" may be used to explain various elements, the elements should not be limited by these terms. These terms may be used for the purpose of distinguishing one element from another element.

The terms used in the present application are merely used to explain specific exemplary embodiments and are not intended to limit the scope of protection. As used herein, the singular forms are intended to include the plural forms as well, unless the context clearly indicates otherwise. The terms "include" or "comprise" used in the exemplary embodiments indicate the presence of disclosed corresponding features, numbers, steps, operations, elements, parts or a combination thereof, and do not preclude the presence or addition of one or more other features, numbers, steps, operations, elements, parts, or a combination thereof.

"Module" or "Unit" used in the exemplary embodiments perform at least one function or operation and may be implemented by using hardware or software or a combination of hardware and software. In addition, a plurality of "modules" or a plurality of "units" may be integrated into at least one module and implemented by using at least one processor (not shown), except for "modules" or "units" which need to be implemented by using specific hardware.

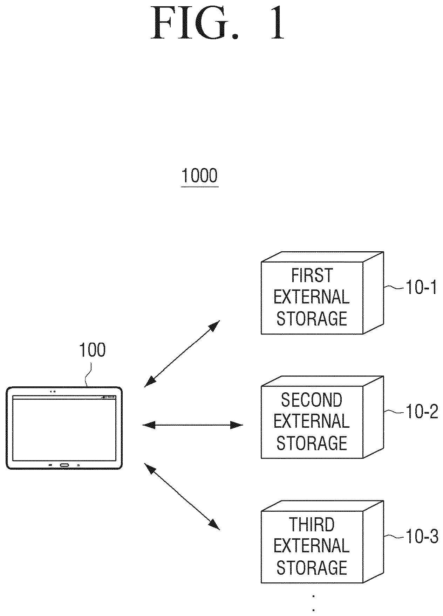

FIG. 1 is a view showing a content storage system 1000 according to an exemplary embodiment. As shown in FIG. 1, the content storage system 1000 according to an exemplary embodiment may include a content processing apparatus 100 and a plurality of external storages 10-1, 10-2, and 10-3.

The content processing apparatus 100 may download or upload various content items (such as video content items, audio content items, photo or image content items, document content items, and other types of content) from or onto the plurality of external storages 10-1, 10-2, and 10-3. In particular, the content processing apparatus 100 may transmit some of the plurality of data units or data components constituting a single content item to at least one of the plurality of external storages 10-1, 10-2, and 10-3, and store the other data units that are not transmitted to the external storages 10-1, 10-2, and 10-3 in a storage of the content processing apparatus 100. When the plurality of data units constituting the content item is pre-stored, only the operation of transmitting some data units to the external storages may be performed and the operation of storing the other data units that are not transmitted to the external storages in the storage of the content processing apparatus may be omitted.

Various criteria for dividing a particular content item into data units to be transmitted to the external storages 10-1, 10-2, and 10-3 and data units to be stored in the internal storage 120 may be set according to an exemplary embodiment. Specifically, data units that are of high importance or take an essential role from among the entire data units corresponding to a particular content item may be stored in the internal storage 120, and the other data units may be stored in the external storages 10-1, 10-2, and 10-3. For the convenience of explanation, in the specification, the data units to be stored in the internal storage 120 are referred to as important data units, and the data units to be stored in the external storages are referred to as subordinate data units. In addition, in the specification, the important data units may refer to data units that enable the content item to be reproduced "normally" using only the important data units, and the subordinate data units may refer to data units which do not enable to content item to be reproduced "normally" using only the subordinate data units.

Specifically, as referenced in the following description, being able to "normally" reproduce contents may imply the following cases: a case in which, when a content reproducing apparatus (for example, a monitor or a speaker) reproduces an image content item or a sound (audio) content item after decoding or performing other signal-processing operations, an image or a sound is output clearly or output to such an extent that it can be recognized even if it is not clearly output; a case in which, when a photo content item is displayed, color is not displayed, but an outline of the image is displayed; a case in which, when a music content item is reproduced, noise exists but it can be recognized what kind of music is reproduced; and a case in which, when a document content item is displayed, a document layout related to text arrangement and size is not displayed, but the text in the document content can be recognized. In addition, "being able to normally reproduce contents" may refer to not only being able to output to such an extent that the "entire" contents can be recognized, but also being able to output to such an extent that "some" of the contents can be recognized. For example, "being able to normally reproduce contents" may imply a case in which some of the content reproducing sections are displayed intermittently, such as, being displayed in the form of a screen preview, and a case in which a thumbnail image representing a content is displayed. The term "normally" can therefore be considered as "such that content can be recognised".

In addition, "being unable to normally reproduce contents", as referenced in the following description, may imply the following cases: a case in which, when a content reproducing apparatus (for example, a monitor or a speaker) reproduces image content item or a sound content item after decoding and performing other signal-processing operations, an image or a sound is not outputted; and a case in which, even when an image is outputted, the outline or shape of the outputted image cannot be recognized, or, even when a sound is outputted, much noise is contained in the outputted sound so that it cannot be recognized what kind of sound is outputted.

According to exemplary embodiments, the data which is stored in the external storages is unable by itself to enable content to be reproduced normally, and it cannot be recognized what kind of content is reproduced only with that data. Therefore, a problem that the contents in the external storages are leaked to the outside can be prevented, and also, both the storage space of the content processing apparatus 100 and the storage space of the external storage can be used. Hereinafter, various criteria for dividing a content into important data able to enable content to be reproduced normally and subordinate data unable to enable content to be reproduced normally will be explained in detail.

The content processing apparatus 100 may restore content by combining the data units that are separately stored in the plurality of external storages 10-1, 10-2, and 10-3 and the storage of the content processing apparatus 100.

The content processing apparatus 100 may be implemented with various electronic devices such as a smartphone, a tablet PC, a smart TV, a set-top box, and the like.

The plurality of external storages 10-1, 10-2, and 10-3 store data transmitted from the content processing apparatus 100, and, in response to a data transmission request being received from the content processing apparatus 100, transmit data corresponding to the request to the content processing apparatus 100.

As described above, the plurality of external storages 10-1, 10-2, and 10-3 maybe external servers that are able to communicate with the content processing apparatus 100 using a wireless network, such as common servers or cloud servers, or may be portable storage devices such as Universal Serial Bus (USB) storage devices.

Although the three external storages 10-1, 10-2, and 10-3 are illustrated in FIG. 1, this is merely an example and there is no limit to the number of external storages. In addition, a single external storage maybe provided, two external storages maybe provided, or more than three external storages may be provided.

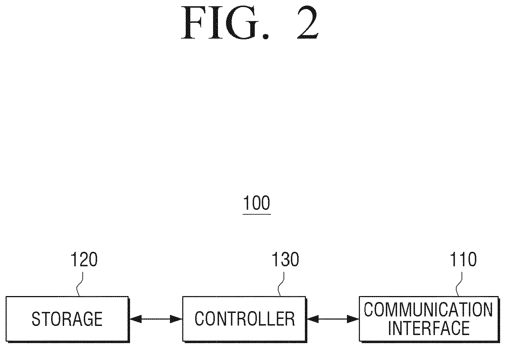

Hereinafter, a configuration of a content processing apparatus 100 according to an exemplary embodiment will be explained with reference to FIG. 2. Referring to FIG. 2, the content processing apparatus 100 includes a communication interface 110, a storage 120, and a controller 130. The content processing apparatus 100 according to an exemplary embodiment may be an apparatus which is able to store or reproduce various content, and may be implemented with various devices such as a smartphone, a tablet PC, and a smart TV. Alternatively, the content processing apparatus 100 may be implemented with an apparatus that processes contents received from external sources and displays the content (for example, a set-top box).

FIG. 2 illustrates the overall elements when the content processing apparatus 100 is provided with the capability of separately storing a plurality of data units constituting a content item. Accordingly, some of the elements shown in FIG. 2 may be omitted or changed, and other elements may be added according to an exemplary embodiment.

The communication interface 110 is configured to communicate with an external device. In particular, some of the plurality of data units constituting a content item may be transmitted to an external storage through the communication interface 110, and, in response to a user command to restore the content being input, the data unit that has been transmitted to the external storage may be received through the communication interface 110. The communication interface 110 may be implemented by using at least one of a Near Field Communication (NFC) interface, a Wi-Fi interface, a Bluetooth interface, a Zigbee interface, or other communication interface. In addition, the communication interface 110 may use wireless communication, and various communication standards such as IEEE, Zigbee, 3rd Generation (3G), 3rd Generation Partnership Project (3GPP), Long Term Evolution (LTE), and the like may be used for wireless communication.

The storage 120 is configured to store various programs and data necessary for driving the content processing apparatus 100. In particular, the storage 120 may store the other data units that are not transmitted to the external storage from among the plurality of data units constituting the content.

The controller 130 controls the overall operations of the content processing apparatus 100. In particular, the controller 130 may transmit some of the plurality of data units constituting the content to the external storage through the communication interface 110 to store the transmitted data units in the external storage. In addition, the controller 130 may store the other data units that are not transmitted to the external storage from among the plurality of data units in the storage 120.

Various criteria for dividing a content item into data units to be transmitted to the external storage and data units to be stored in the internal storage 120 may be set. Specifically, data units which are of high importance or take an essential role from among the entire data units may be stored in the internal storage 120, and the other data units may be stored in the external storage. For the convenience of explanation, in the specification, the data units to be stored in the internal storage 120 are referred to as important data units, and the data units to be stored in the external storage are referred to as subordinate data units.

According to an exemplary embodiment, the controller 130 may divide the content item into the important data units and the subordinate data units with reference to whether they are able to enable the content item to be reproduced or not. That is, the data unit that is unable by itself to enable the content item to be reproduced may be transmitted to the external storage through the communication interface 110 and stored in the external storage. Being unable to enable content to be reproduced refers to a state in which, when a content reproducing apparatus (for example, a monitor or a speaker) reproduces image content or sound content after decoding and performing other signal-processing operations, a normal image or sound is not output. In addition, the controller 130 may store the other data units which are not transmitted to the external storage from among the plurality of data units in the storage 120. Therefore, the storage 120 may store the data that is able to enable content to be reproduced by itself (i.e., the content item can be reproduced without using the subordinate data units). Hereinafter, the data which is unable to enable content to be reproduced and the data which is able to enable content to be reproduced will be explained in detail.

In an example not falling within the scope of the claims, it is assumed that a content item is video content consisting of signals that comply with the standards of digital image compression technology, such as MPEG or H.264, in which the content consists of plurality of Groups of Picture (GOPs) including an intra-frame and an inter-frame

Specifically, the intra-frame (I frame) is a frame that may be coded by using only pixels within the frame without coding with a motion compensated estimation relative to any other frames. In addition, a predictive frame (P frame) from among the inter-frames is a one-way predictive frame that may be coded with a motion compensated estimation between frames with reference to a preceding I-frame and a preceding P-frame. Finally, a bi-directionally predictive frame (B frame) from among the inter-frames is a two-way predictive frame that may be coded with a motion compensated estimation in a forward and a backward direction, with reference to either an I-frame or a P-frame positioned before the B-frame in time and with reference to either an I-frame or a P-frame located after the B-frame. From among the I frame, P frame, and B frame, the B frame shows the highest compression efficiency. Each GOP including the I-frame, P-frame and B-frame means that a plurality of frames are combined in various patterns, but in a regular order of I- frame, P- frame and B- frame in a single group.

From among these frames, the intra-frame, that is, I frame, is by itself able to enable content to be reproduced. That is, a particular content item can be reproduced using only the I frames. On the other hand, the inter-frame, that is, B or P frame is unable to enable content to be reproduced without referring to the I frame. Thus, the video content item could not be reproduced using B frames and/or P frames without also using the I frames.

Therefore, the controller 130 may store the data units including I frames within the content in the internal storage, and transmit the data units including B and P frames to the external storage.

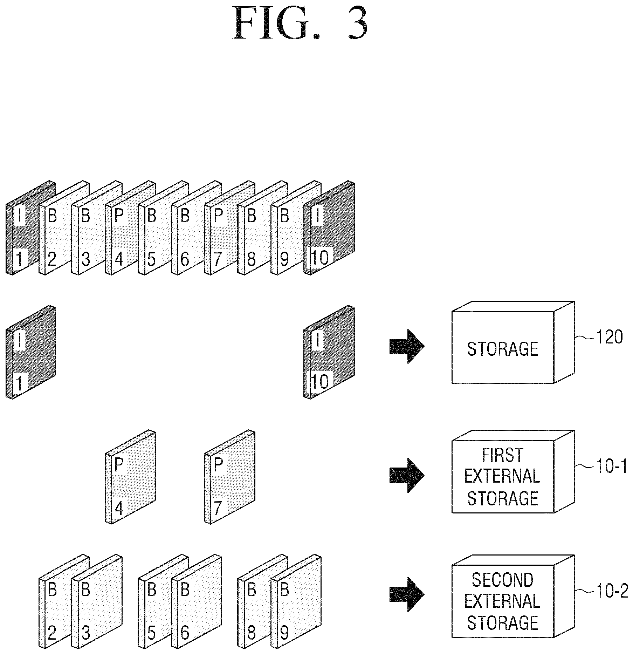

FIG. 3 illustrates the above-described example. Referring to FIG. 3, when a content item includes 10 frames including I frames, B frames, and P frames, the controller 130 may store a data unit including the I frames of the content in the storage 120 of the content processing apparatus 100. In addition, the controller 130 may transmit a data unit including the P frames to the first external storage 10-1, and a data unit including the B frames to the second external storage 10-2. In FIG. 3, the data unit including P frames and the data unit including the B frames are stored in different external storages. However, the controller 130 may transmit the data unit including the P frames and the data unit including the B frames to the same external storage to store the transmitted data in the same external storage.

The content item cannot be reproduced with only the subordinate data units such as the B frame or P frame that were transmitted to the external storages. That is, even when another user accesses the external storages, the user cannot recognize the content item with only the inter-frames such as B frames or P frames. Therefore, a content item that a user desires to keep private is less likely to be leaked or disclosed to the outside. In addition, when the content item is protected by a copyright, copyright infringement can be prevented because only the subordinate data units of the content item are stored on external storages. In addition, it is possible to roughly recognize the content item using the important data such as intra-frames stored in the storage 120, even if not fully recognized. For example, the controller 130 may provide summary information of the content item or a preview screen to the user using data units including intra-frames stored in the storage 120. The present example will be explained in detail with reference to the drawings later.

In the above-described example, the important data and the subordinate data are divided on a frame basis. However, according to another example, the controller 130 may divide content data on a bit basis and store the bits separately.

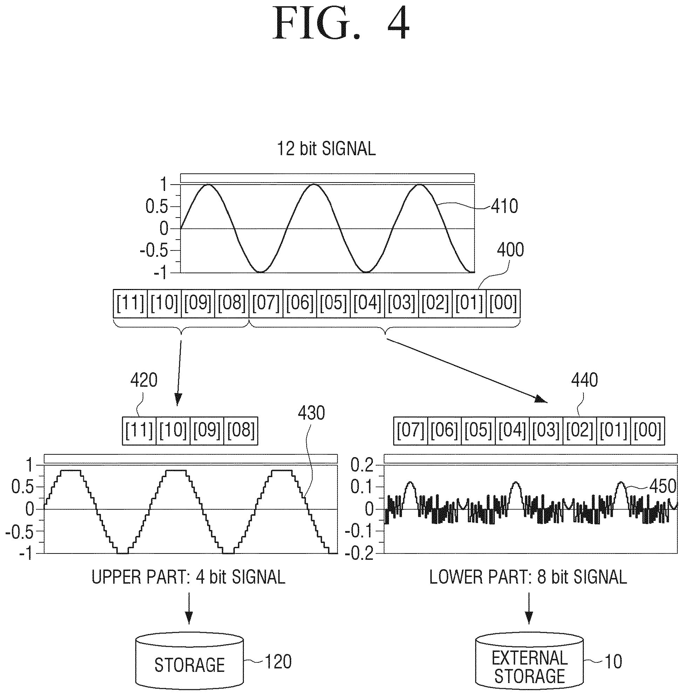

FIG. 4 is a view to illustrate an example not falling within the scope of the claims in which content data is divided on a bit basis. Referring to FIG. 4, a single data unit 400 of a content item may be formed of a plurality of bits. In FIG. 4, the data unit is formed of 12 bits, but the number of bits is not limited to this.

The single data unit 400 is formed of a Most Significant Bit (MSB) located at the leftmost end, a Least Significant Bit (LSB) located at the rightmost end, and bits between the MSB and LSB. The controller 130 may divide the single data unit 400 into an MSB part and an LSB part and separately store them. Specifically, the controller 130 may store the MSB to n-th MSB in the storage 120 and store the n+i-th MSB to LSB in an external storage.

As shown in FIG. 4, on the assumption that the single data unit is 12 bits long and n is 3, the controller 130 may group the four upper bits into an MSB part 420 and the other eight bits into an LSB part 440. The controller 130 stores the MSB part in the storage 120 and stores the LSB part in the external storage 10. When the single data unit 400 indicates a normal sine wave 410, a waveform 430 reproduced by the MSB part is slightly distorted, but maintains the sine waveform. On the other hand, a waveform 450 reproduced by the LSB part is seriously distorted and thus is unable to reproduce data.

In the above-described bit division method, various content data such as an image, a voice, music, and a photo may be divided on a bit basis, and an MSB part consisting of important bits may be stored in the storage 120, and an LSB part consisting of subordinate bits maybe stored in the external storage. Specifically, when an image content item is reproduced using the bits of the MSB part, the image is not clearly displayed but is displayed to such an extent that it can be recognized. In addition, in the case of a voice or music content item, MSB part signals are reproduced and sound is output to such an extent that the voice or music can be recognized, but the LSB part signals alone would only output noise through the speaker and thus it cannot be recognized what kind of voice or music is output. In other words, the data units stored in the external storage (the LSB part) are unable to normally reproduce contents.

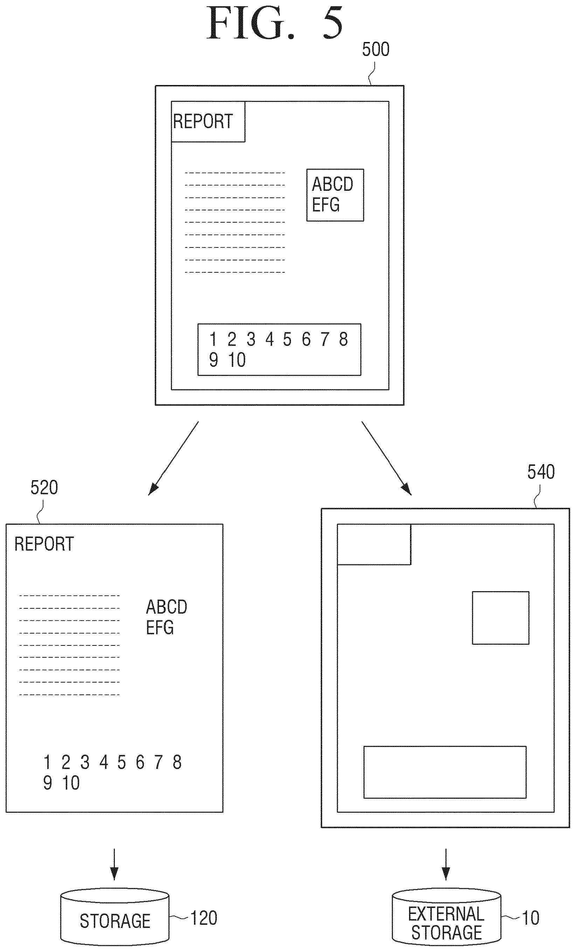

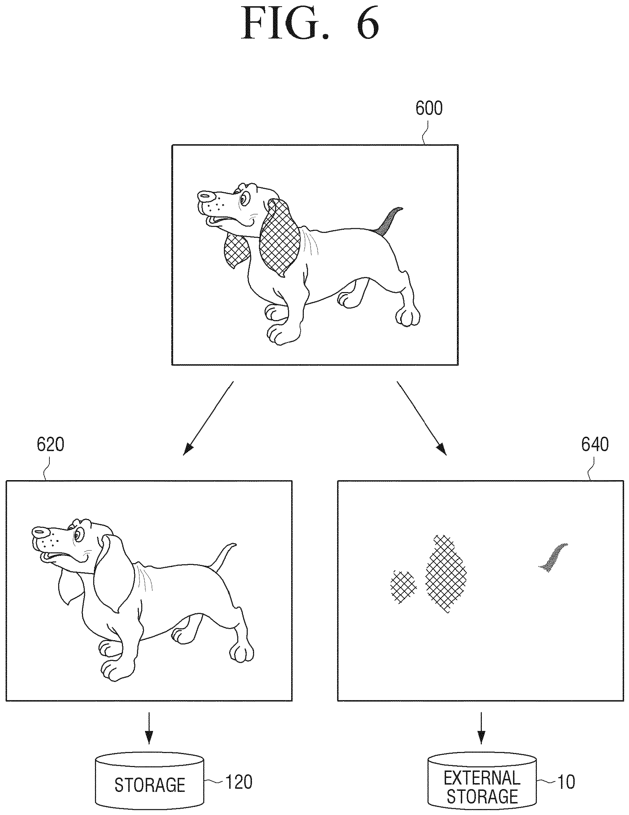

In addition, the plurality of data units may be divided into important data units and subordinate data units according to a kind of content, and may be separately stored. This will be explained below with reference to FIGs. 5 and 6.

FIG. 5 is a view to illustrate an embodiment of the present invention in which a document content item is divided and stored separately. Referring to FIG. 5, when the content item is a document content item 500, the controller 130 may store a data unit 520 including text (i.e. information on the text of the document) within the document content item 500 in the storage 120, and transmit a data unit 540 including a document layout (or a form) (i.e. information on the layout or the form of the document) within the document content 500 to the external storage 10 and store the same in the external storage 10. When the document content 500 is created according to a specific report layout as shown in FIG. 5, the document content 500 can be recognized by the data unit 520 that includes the document text (i.e. information on the text of the document). On the other hand, it cannot be recognized what text is contained in the document content 500 based on the data unit 540 that includes the layout (i.e. information on the layout of the document, but not the text itself).

FIG. 6 is a view to illustrate an example, not falling within the scope of the claims, of dividing a photo (image) content item and storing separately. Referring to FIG. 6, when the content item is a photo 600, the controller 130 detects outline information and color information of the photo content item, and stores a data unit 620 that includes the outline information of the photo content item in the storage 120 and transmits a data unit 640 that includes the color information of the photo content item to the external storage 10 and stores the same in the external storage 10. The photo 600 can be recognized by the data unit 620 that includes the outline information. On the other hand, it cannot be recognized what photo it is with only the data unit 640 that includes the color information.

According to another example not falling within the scope of the claims, the controller 130 may divide a content item into a video data unit and an audio data unit, and may transmit the audio data unit to the external storage to store the audio data in the external storage, and store the video data unit in the storage 120. In this case, the controller 130 may further divide the video data unit into inter-frames and intra-frames as described above, and may transmit the data unit including the inter-frames to the external storage.

According to various configurations described above, from among the plurality of data units constituting a content item, important data units which take an important role in reproducing the content item or make an important contribution to recognizing the content item are stored in the storage 120 of the content processing apparatus 100, and subordinate data units that are unable to reproduce the content item using only those data units or based on which the content item cannot be recognized are stored in the external storage, so that the storage space of the external storage can be efficiently used without the risk of the content item being leaked to the outside.

In the above-described examples, the plurality of data units constituting the content item are divided into important data units and subordinate data units. However, other examples, not falling within the claim scope, may also be implemented in which the plurality of data units constituting the content are divided by a predetermined criterion and are stored in different storages, the criterion for dividing may be determined according to whether the content can be recognized or not.

Hereinafter, a content processing method for reproducing a complete content item using data units that are separately stored in the storage 120 of the content processing apparatus 100 and the external storage will be explained.

According to an example not falling within the scope of the claims, the controller 130 may store information on the location of data units transmitted to the external storage or information on a combining order of divided data units in the storage 120. In addition, in response to a reproducing command on the content being input through an inputter (not shown), the controller 130 may request the external storage that stores the data units to transmit the data based on the storage location information of the data units constituting the corresponding content item.

In addition, the controller 130 may receive the data units from the external storage that receives the data transmission request through the communication interface 110, and may control a content processor (not shown) to reproduce the content using the received data units and the data units pre-stored in the storage 120.

In an example not falling within the scope of the claims, when, from among the plurality of data units constituting content item 'A', data units including P frames of content 'A' are stored in the first external storage 10-1, and B frames of content 'A' are stored in the second external storage 10-2, the storage 120 may store information on the storage locations of these data units. In addition, the controller 130 may request the first external storage 10-1 to transmit data related to content item 'A' and request the second external storage 10-2 to transmit data related to content item 'A' using the information stored in the storage 120.

In this case, the controller 130 may request the external storages to transmit all the data related to content item 'A' or transmit some of the data. For example, the plurality of data units stored in the external storages may be stored in different external storages according to which reproduction section the data units belong to, and the controller 130 may request the external storages to transmit only the data corresponding to a specific reproduction section. In this case, the storage 120 may store information on a reproduction time corresponding to the data units along with the information on the storage locations of the data units stored in the external storages.

Specifically, in response to a user manipulation to select a reproduction start point of the content item being received at the inputter, the controller 130 may request the external storage to transmit data corresponding to a reproduction time slot subsequent to the selected reproduction start point through the communication interface 110, and may receive the data. Since the data is divided according to a reproduction time of the content item and stored in the external storages, the external storage may transmit only the data subsequent to a specific reproduction time to the content processing apparatus 100 according to the request of the controller 130.

In a case in which the total reproduction time of content item 'A' is 50 seconds, in response to a user manipulation to select 10 seconds as a reproduction start point being received at the inputter, the controller 130 may request the external storages to transmit data corresponding to 10-50 seconds. When data corresponding to 10-30 seconds is stored in the first external storage 10-1 and data corresponding to 31-50 seconds is stored in the second external storage 10-2, the controller 130 may request the first external storage 10-1 to transmit data corresponding to the reproduction time of 10-30 seconds of content 'A,' and request the second external storage 10-2 to transmit data corresponding to the reproduction time of 31-50 seconds of content 'A.'

Meanwhile, in a case, not falling within the scope of the claims, in which data constituting a content is divided on a bit basis and separately stored, in response to a user manipulation to restore the content being input, the controller 130 may request data in bit units related to the corresponding content from the external storages and receive the data. In addition, the controller 130 may restore the content item using the received data and data in bit units stored in the storage 120.

When the content item is a document, according to an embodiment of the present invention, data units including text within the document content item maybe stored in the storage 120, and data units including a layout within the document content item may be stored in the external storages as described above. In response to a user manipulation to view the document content being input, the controller 130 may request the external storages to transmit the data units including the layout of the corresponding document content item. In response to the data units including the layout of the document content item being received from the external storages according to the request, the controller 130 may display (reproduce) the complete document content item through the display 140 using the data units including the texts which are stored in the storage 120, and the received data units including the layout of the document content item. In response to an additional user manipulation to change the layout of the document content item being input, the controller 130 transmits data units including the changed layout to the external storages to store the changed layout, and to delete the data units including the previous layout from the external storages. In this way, the data stored in the external storages may be updated.

In a case, not falling within the scope of the claims, in which video data and audio data constituting a content item are separately stored in the storage 120 and the external storages, in response to a user manipulation to reproduce the content being input, the controller 130 may request the external storage in which the audio data of the content item is stored to transmit the audio data and receive the audio data. In addition, the controller 130 may control the content processor to reproduce the content item using the received audio data and the video data stored in the storage 120.

When the content item is a photo, not falling within the scope of the claims, the controller 130 may store data units including outline information of the photo in the storage 120 and may transmit data units including color information of the photo to the external storages to store the data units including color information of the photo in the external storages, as described above. Thereafter, in response to a user manipulation to view the photo being input, the controller 120 may request the external storage in which the data units including the color information of the photo are stored to transmit those data units, and may receive the data units including the color information. Thus, the controller 130 may display the complete photo on the display 140 using the received data units including the color information and the data units including the outline information that are stored in the storage 120.

As described above, according to various configurations, the content item is divided into the plurality of data units according to various criteria and the data units are separately stored in the storage 120 and the external storages. In this case, important information such as information on storage locations of separately stored data units or information on data unit combining order may be stored in the storage 120 of the content processing apparatus 100, and a complete content can be restored with reference to the important information. Accordingly, the authority to restore the content is given to only the content processing apparatus 100 storing the important information, and thus it is impossible to restore the content at a device of another user. That is, even when the device of another user acquires the data units separately stored, it cannot be recognized what content is formed by the data units. Therefore, private information included in the content can be prevented from being leaked or disclosed to the outside and copyright infringement of content can be prevented. In addition, since only the apparatus storing the important information such as information on storage locations of separately stored data units or information on data unit combining order is allowed to restore the content, this adds another protection in that the content can be reproduced only by the user's own apparatus if the content is meaningful or important to the user (for example, a wedding video).

According to an exemplary embodiment, the content processing apparatus 100 may provide a variety of information on the content item to the user using only the data stored in the storage 120, prior to or after restoring the complete content.

In an example not falling within the scope of the claims, from among the plurality of data units constituting the content item, the data units that are not transmitted to the external storages and are stored in the storage of the content processing apparatus 100 may include data units that are able to enable the content to be reproduced. In this case, being able to reproduce the content may imply that a part of the content item may be reproduced or displayed.

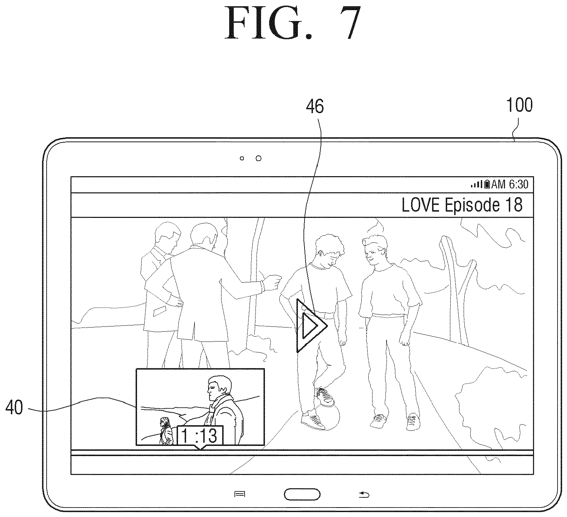

As described above, in an example not falling within the scope of the claims, when the content item is formed of a plurality of inter-frames and intra-frames, the controller 130 may transmit the inter-frames to the external storages and store the same in the external storages, and may store the intra-frames in the storage 120. Since the intra-frames are able to enable the content item to be reproduced, the controller 130 may reproduce a part of the content item using the intra-frames. Specifically, the controller 130 may control the display 140 to display a preview screen of each time slot of the content item using the intra-frames. Hereinafter, an example not falling within the scope of the claims related to displaying a preview screen will be explained with reference to FIG. 7.

FIG. 7 is a view to illustrate a method for providing a content preview in a content processing apparatus according to an example not falling within the scope of the claims.

Referring to FIG. 7, the controller 130 may display a preview screen of each reproduction time slot of the content item on the display 140 provided on the content processing apparatus 100, using data units including intra-frames stored in the storage 120. For example, in response to a user manipulation to select a reproduction start point of 1 min:13 sec being received at the inputter, the controller 130 may display a preview image 40 at the time slot of 1 min: 13 sec using the intra-frames corresponding to the reproduction time slot of 1 min: 13 sec from among the intra-frames stored in the storage 120.

That is, according to an example not falling within the scope of the claims, even when the content item is divided and the data units are separately stored in the storage 120 and the external storage, information on the content item such as a preview screen can be provided with only the data stored in the storage 120.

In addition, in response to a command to reproduce the content item being input after the display of the preview screen, the controller 130 may request data corresponding to the reproduction time slot subsequent to the selected reproduction start point from the external storages through the communication interface 110, and receive the data. Referring to FIG. 7, in response to the user selecting a replay button 46 after selecting the reproduction start point of 1 min: 13 sec, the controller 130 may request data corresponding to the reproduction time slot subsequent to 1 min: 13 sec from the external storages through the communication interface 110, and receive the data.

In this case, in order to reduce the time required to call the data, the controller 130 may request the external storages to transmit the data corresponding to the reproduction time slot subsequent to the selected reproduction start point in response to the manipulation to select the reproduction start point being detected, before the replay button 46 is selected. That is, according to an example not falling within the scope of the claims, the data may be received in advance so that the content item can be reproduced as soon as the replay button 46 is selected.

In addition, the controller 130 may control the content processor (not shown) to reproduce the content item using the data units received from the external storages and the data units stored in the storage 120. Specifically, in response to a request to reproduce the content item being input, the controller 130 may control the content processor to demodulate and equalize the encoded data units. In addition, the content processor may perform decoding such that the demodulated and equalized frames are displayed on the display 140.

According to the example described above, not falling within the scope of the claims, even when data is received from the external storages and a complete content item is not restored, the content processing apparatus 100 may provide rough information on the content item to the user using only the data stored therein. In addition, since only the data corresponding to a specific reproduction section is received from the external storages according to user selection, the amount of data transmitted can be reduced.

According to the above-described example not falling within the scope of the claims, information on the content item (for example, a preview screen) is provided to the user using the data constituting the content item. According to another example not falling within the scope of the claims, the storage may further store information related to the content item in addition to the data constituting the content item, and the controller 130 may provide a variety of information on the content item to the user based on this information.

For example, the controller 130 may store content summary information corresponding to the content item in the storage 120, and display the content summary information on the display 140. The content summary information may be information on a thumbnail representing the content item, a story line of the content item, actors of the content item, and a reproduction time of the content item.

According to the examples described above, the user can recognize the rough information on the content item that the user is interested in through the content processing apparatus 100 before the data is received from the external storages and the complete content item is restored. Meanwhile, since the content summary information based on which the content item can be recognized is stored only in the storage 120 of the content processing apparatus 100 and is not stored in the external storages, even the rough information of the content item can be also prevented from being leaked or disclosed to the outside.

Up to now, the respective elements of the content processing apparatus 100 according to various exemplary embodiments have been described. Hereinafter, a content processing method in a content processing apparatus according to exemplary embodiments will be explained.

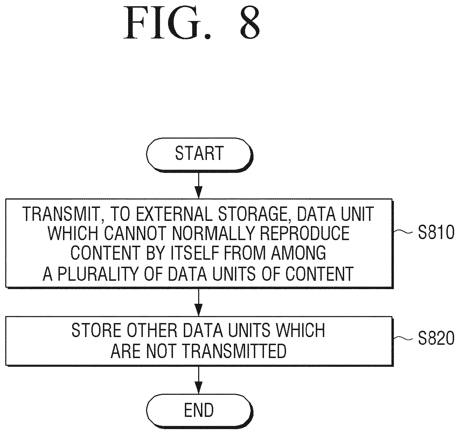

FIG. 8 is a flowchart to illustrate a content processing method according to an exemplary embodiment.

As shown in FIG. 8, the content processing apparatus 100 transmits data units that are alone unable to enable a content item to be reproduced from among a plurality of data units that constitute the content item to an external storage to store the transmitted data in the external storage (S810). In addition, the content processing apparatus 100 stores the other data units that are not transmitted to the external storage in the internal storage of the content processing apparatus 100 (S820).

Specifically, the content processing apparatus 100 may transmit a plurality of data units to at least one external storage to store the transmitted data units in the at least one external storage. Since the data units that are transmitted to the external storage are alone unable to enable content to be reproduced, the content item stored in the external storage can be prevented from being leaked or disclosed to the outside. According to another exemplary embodiment, the external storage in which the data units of the content item are stored may require a user authentication process to allow access to the data units, for the sake of additional security.

Thereafter, in response to a user manipulation to reproduce the content being input, the content processing apparatus 100 may request the data from the external storage and receive the data, and may reproduce the content item using the data stored in the internal storage of the content processing apparatus 100 and the received data.

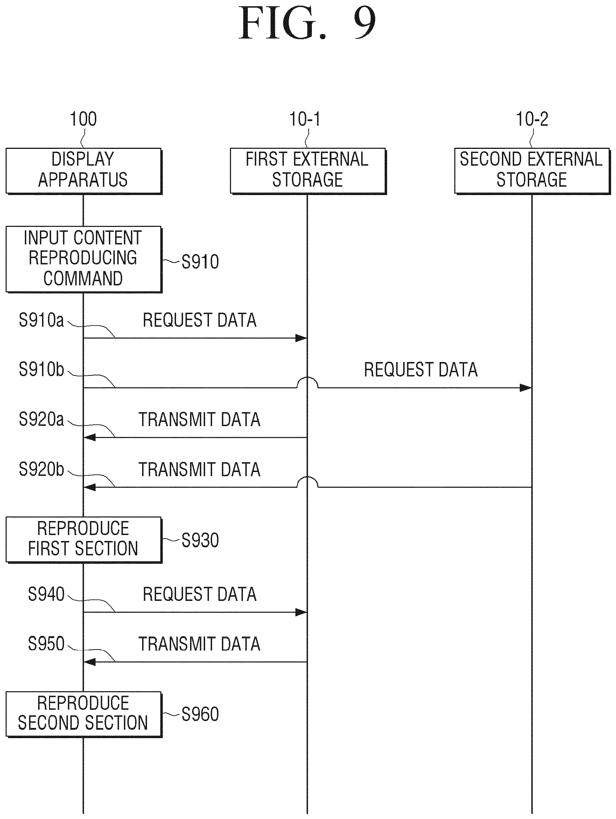

According to another exemplary embodiment, the content processing apparatus 100 may divide the content item into a plurality of data units with reference to a content reproduction section, and may store the plurality of data units in the external storage and the internal storage. The present exemplary embodiment will be explained with reference to FIG. 9.

FIG. 9 is a sequence diagram to illustrate a content processing method according to an example not falling within the scope of the claims.

For example, the content processing apparatus 100 may store data corresponding to a first reproduction section in the first external storage 10-1 and the second external storage 10-2, and store data corresponding to a second reproduction section in the first external storage 10-1. In this case, the storage 120 of the content processing apparatus 100 may store important data (for example, intra-frames) corresponding to all the sections of the content.

As shown in FIG. 9, in response to a content reproducing command being input (S910), the content processing apparatus 100 requests data from the first external storage 10-1 (S910a), and requests data from the second external storage 10-2 (S910b), in which the data corresponding to the first reproduction section of the content item is stored. Thereafter, the first external storage 10-1 transmits the data to the content processing apparatus 100 according to the request (S920a), and the second external storage 10-2 transmits the data to the content processing apparatus 100 according to the request (S920b).

In this way, the content processing apparatus 100 can reproduce the first reproduction section of the content item using the data received from the first external storage 10-1 and the second external storage 10-2 and the data pre-stored in the content processing apparatus 100 (S930).

Thereafter, the content processing apparatus 100 requests data from the first external storage 10-1 in which the data corresponding to the second reproduction section of the content item is stored (S940). Thereafter, the first external storage 10-1 transmits the data to the content processing apparatus 100 according to the request (S950).

In this way, the content processing apparatus 100 can reproduce the second reproduction section of the content item using the data received from the first external storage 10-1 and the data pre-stored in the content processing apparatus 100 (S960).

In the content processing method of the content processing apparatus according to various configurations as described above, the content item is divided into the plurality of data units and the data units are separately stored, and, since the data stored in the external storage that is accessible to other users cannot normally enable the content item to be reproduced without the important data of the content item, the content item can be prevented from being leaked or disclosed. In addition, since the content item is divided into the plurality of data units according to various criteria such as a reproduction section and stored, the risk that the content is leaked or disclosed to other users can be further reduced. In the above-described examples, the content processing method has been described on the assumption that the content item is video content by way of an example. However, according to various configurations, various kinds of content (for example, a photo content item, a sound (audio) content item, a document content item, or the like) may be separately stored according to various criteria. The method for processing such content has been described and thus a redundant explanation is omitted.

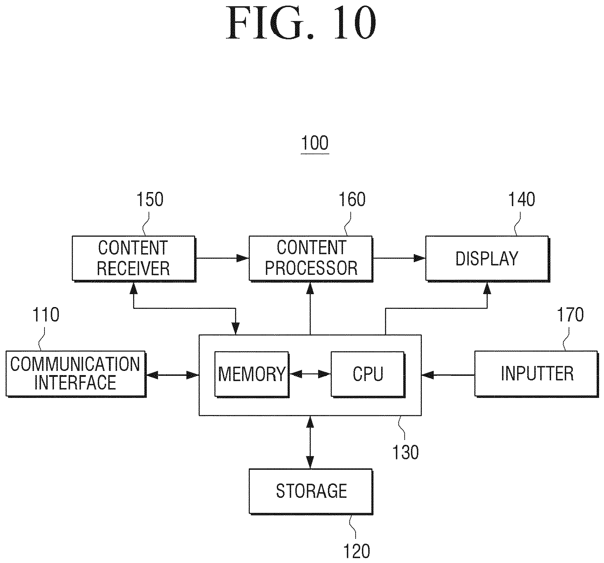

Meanwhile, various kinds of content items to be processed by the content processing apparatus 100 may be input to the content processing apparatus 100 via various paths. The present exemplary embodiment will be explained below with reference to FIG. 10.

FIG. 10 is a block diagram to illustrate a content processing apparatus 100 according to another exemplary embodiment. Referring to FIG. 10, the content processing apparatus 100 includes a communication interface 110, a storage 120, a controller 130, a display 140, a content receiver 150, a content processor 160, and an inputter 170.

The communication interface 110 is configured to communicate with various external devices. In particular, content items may be downloaded or streamed from external content sources through the Internet via the communication interface 110. From among a plurality of data units constituting the received content item, subordinate data units that are of low importance may be transmitted to an external storage through the communication interface 110 as described, and the subordinate data unit transmitted to the external storage may be received by the content processing apparatus 100 through the communication interface 110.

The content receiver 150 may receive content items from various sources. Specifically, the content receiver 150 may receive broadcast content from external broadcasting stations. For example, the content receiver 140 may receive various broadcast content such as a terrestrial broadcast, a satellite broadcast, a cable broadcast. In addition, the content receiver 150 may receive content from an external device (for example, a Digital Versatile Disk (DVD) player, a Blu-ray Disk (BD) player, a camera, a camcorder, etc.), and may receive content through an external input terminal (for example, HDMI, DVI, a digital broadcast receiver, a USB terminal). The particular content items received in this way may be divided into a plurality of data units by the content processing apparatus 100, and the data units may be separately stored in the storage 10 and the external storage.

Although not shown in FIG. 10, an imager for capturing a photo or a moving image or a microphone for recording a sound maybe provided in the content processing apparatus 100. In examples not falling within the scope of the claims, the photo or moving image content item captured by the imager or a recorded sound content item may be divided into a plurality of data units and the data units may be separately stored as described above. For example, when the content item is a photo, data units including outline information of the photo may be stored in the storage 120, and data units including color information of the photo may be stored in the external storage.

In addition, according to an embodiment of the present invention, the content processing apparatus 100 stores a document creation program, such that the user can generate a document content item by executing the document creation program. The controller 130 may divide the document content item generated in this way into text data and layout data, and may store the text data in the storage 120 and transmit the layout data to the external storage.

The storage 120 is configured to store various data. In particular, the storage 120 may store data units which are of high importance from among a plurality of data units constituting a content item, and may further store information on the content item (for example, content summary information), as described above. The storage 120 may be implemented with an internal storage provided in the content processing apparatus 100. Alternatively, the storage 120 may be implemented with an external storage device connectable to the content processing apparatus 100 in a wire/wireless manner. For example, the storage 120 may be implemented with a USB storage device or an external hard disk drive.

The content processor 160 is configured to reproduce a content item. Specifically, in response to a reproducing command on the content being received at the inputter 170, the content processor 160 may reproduce the content item corresponding to the reproducing command. In particular, the content processor 160 may restore a complete content item by combining data units stored in the storage 120 and data units received from the external storage, and reproduce the restored content item. In examples not falling within the scope of the claims, the controller 130 may control the content processor 160 to combine the data units based on information on a combining order of the data units stored in the storage 120.

The content processor 160 may reproduce a part of the content using only the data units stored in the storage 120. For example, the content processor 160 may reproduce a content preview screen.

The controller 130 is configured to control the content processing apparatus 100, and may include a Central Processing Unit (CPU) and a memory in which an operating system (O/S) and various programs are stored. The CPU may access the memory and perform booting using the O/S stored in the memory. The CPU performs various operations using various programs, contents, and data stored in the memory. Various operations of the controller 130 have been described and thus a redundant explanation thereof is not repeated.

The inputter 170 may receive an input of a user command to control the content processing apparatus 100. The inputter 170 maybe implemented in various forms. For example, the inputter 170 may be implemented in the form of a touch screen combining the display 140, a pointing device, or a mouse.

The display 140 is configured to display various screens under control of the controller 130. In FIG. 10, the display 140 is an element of the content processing apparatus 100. However, the content processing apparatus 100 maybe connected with a separate display apparatus. In this case, the content processing apparatus 100 may not include display 140 as an element of the content processing apparatus 100.

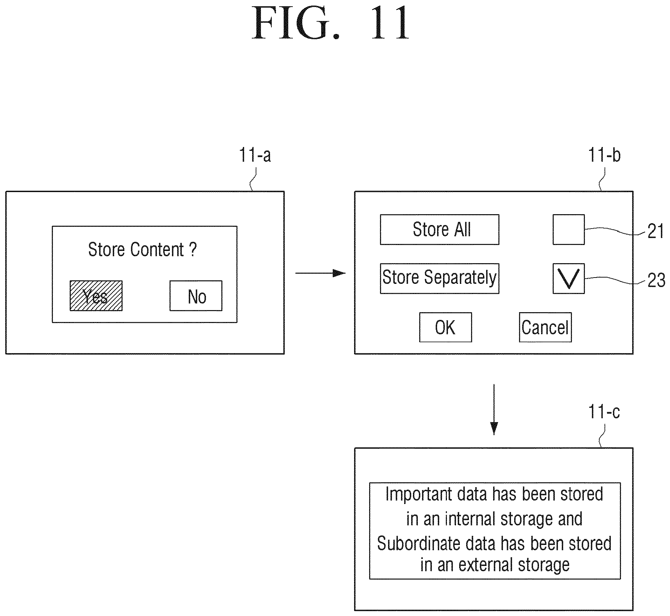

The display 140 may display a content which is restored through the content processor 160. In addition, the display 140 may display information related to the content as well as the content, display a content preview screen, and display various UI screens to receive a user input related to content processing. Various UI screens displayed on the display 140 will be explained below with reference to FIGs. 11 to 12.

FIG. 11 is a view to illustrate a UI screen for controlling the content processing apparatus 100 according to an exemplary embodiment.

Referring to FIG. 11, the controller 130 may display a UI screen 11-a for determining whether to store a content item on the display 140. Thereafter, in response to a user manipulation to store the content item being input, the controller 130 may display a UI screen 11-b for selecting a content storage method on the display 140. In this case, the user may select one of "store all" 21 and "store separately" 23 through the UI screen 11-b. In response to "store all" 21 being selected and an ok button being selected, the controller 130 stores the entire content item in the storage 120. In response to "store separately" 23 being selected and the ok button being selected, from among the plurality of data units constituting the content item, the controller 130 may store important data units in the storage 120, and store subordinate data units in an external storage.

In this case, although not shown in FIG. 11, a separate UI screen for selecting an external storage to store subordinate data units may be additionally displayed in response to "store separately" 23 being selected.

According to another exemplary embodiment, the subordinate data units may be automatically transmitted to a predetermined external storage without an extra manipulation for selecting an external storage.

In response to the store separately operation being completed, the controller 130 may display a message screen 11-c indicating the completion of the store separately operation on the display 140.

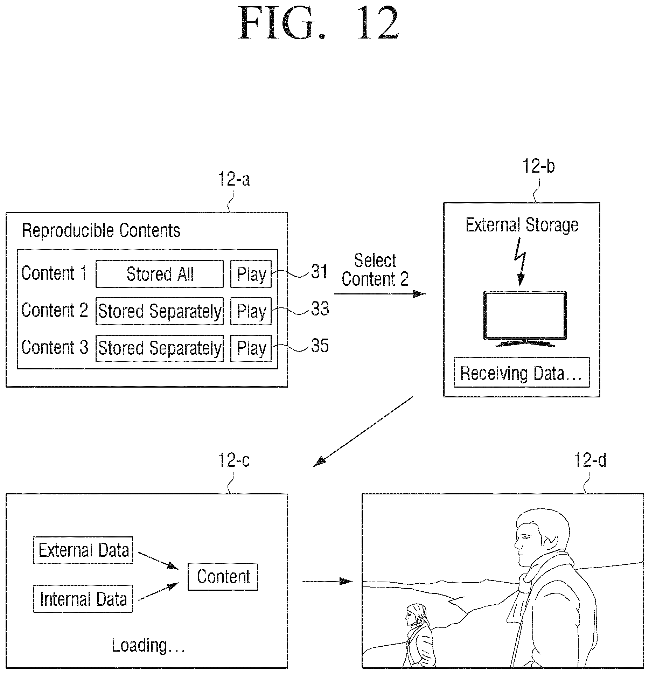

FIG. 12 is a view to illustrate a content reproducing process of a content processing apparatus 100 according to an exemplary embodiment.

Referring to FIG. 12, the controller 130 may display a UI screen 12-a for selecting a content item to be reproduced on the display 140. A list of reproducible content items may be displayed on the UI screen 12-a and buttons 31, 33, and 35 to select a content item to be reproduced maybe displayed.

In response to a user manipulation to select one of the plurality of reproducible content items being input, in which the content items consist of the plurality of data units of that are separately stored in the storage 120 and an external storage, the controller 130 may receive data units on the selected content item from the external storage. In this case, a screen 12-b indicating that the data is being received may be displayed on the display 140. In addition, the controller 130 may restore the content item by combining the received data and the data stored in the storage 120, and display a screen 11-c indicating that the content item is being restored on the display 140. Thereafter, in response to the restoring of the content being completed, the controller 130 may reproduce the content item and display the content item on the display 140 (12-d).

In the above-described exemplary embodiments, the important data is stored in the internal storage of the content processing apparatus 100. However, this should not be considered as limiting. That is, the important data and the subordinate data of the content item may be stored in different external storages. In this case, the external storage in which the important data is stored is not accessible to other users. To access the external storage, a user authentication process may be required. Therefore, an apparatus that is implemented to store the important data and the subordinate data of the content item in different storage devices, or a control method thereof may be embodied within the scope of the present disclosure.

The content processing method according to the above-described various exemplary embodiments may be stored in a non-transitory computer readable medium. The non-transitory computer readable medium may be mounted and used in various devices.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB), a memory card, and a read only memory (ROM), and may be provided.

Accordingly, the above-described program may be installed in an existing device and the content processing apparatus capable of dividing a content item into a plurality of data units and separately storing the data units may be implemented.

In accordance with various exemplary embodiments described above, it is possible to rapidly access a content using data of the content stored in the content processing apparatus, and, also, since the content is not reproduced with only the content data stored in the external storage, the security of the content data stored in the external storage can be enhanced, and a copyright infringement can be prevented.

The foregoing exemplary embodiments and advantages are merely exemplary and are not to be construed as limiting the present invention. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A content processing apparatus (100) comprising:
a communication interface (110) configured to communicate with an external storage (10);
an internal storage (120);
a display (140);
a controller (130) configured to:
transmit, to the external storage through the communication interface, a first data component from among a plurality of data components constituting a content item,
store in the internal storage (120) a second data component from among data components of the plurality of data components that are not transmitted to the external storage,
in response to a user command to restore the content item, receive the first data component from the external storage through the communication interface,
wherein the first data component transmitted to the external storage does not allow the content item to be reproduced normally without the second data component,
wherein the controller is configured to:
in response to the content item being a document content item, store text of the document content item as the second data component in the internal storage, and transmit document layout information of the document content item to the external storage as the first data component,
in response to a user manipulation to view the document content item being input, request the external storage to transmit the document layout information of the document content item,
in response to the document layout information of the document content item being received from the external storage according to the request, display the document content item through the display using the text of the document content item stored in the internal storage and the document layout information of the document content item, and
in response to a user manipulation to change a layout of the document content item being input, transmit changed document layout information to the external storage to store changed layout and to delete the document layout information of the document content item from the external storage.

2. A content processing method of a content processing apparatus (100), the content processing method comprising:
transmitting, to an external storage (10), a first data component from among a plurality of data components constituting a content item;
storing, in an internal storage (120) of the content processing apparatus, a second data component from among data components of the plurality of data components that are not transmitted to the external storage; and
in response to a user command to restore the content item, receiving the first data component from the external storage,
wherein the first data component transmitted to the external storage does not allow the content item to be reproduced normally without the second data component,
wherein the content item is a document content item,
wherein the storing comprises storing text of the document content item as the second data component in the internal storage,
wherein the transmitting comprises transmitting document layout information of the document content item to the external storage as the first data component,
wherein the method further comprises:
in response to a user manipulation to view the document content item being input, requesting the external storage to transmit the document layout information of the document content item,
in response to the document layout information of the document content item being received from the external storage according to the request, displaying the document content item through the display using the text of the document content item stored in the internal storage and the document layout information of the document content item, and
in response to a user manipulation to change a layout of the document content item being input, transmitting changed document layout information to the external storage to store changed layout and to delete the document layout information of the document content item from the external storage.

## Patentansprüche

1. Inhaltsverarbeitungsvorrichtung (100), umfassend:
eine Kommunikationsschnittstelle (110), die konfiguriert ist, um mit einem externen Speicher (10) zu kommunizieren;
einen internen Speicher (120);
eine Anzeige (140);
eine Steuerung (130), die für Folgendes konfiguriert ist:
Übertragen, an den externen Speicher durch die Kommunikationsschnittstelle, einer ersten Datenkomponente aus einer Vielzahl von Datenkomponenten, die ein Inhaltselement bilden,
Speichern, in dem internen Speicher (120), einer zweiten Datenkomponente aus Datenkomponenten aus der Vielzahl von Datenkomponenten, die nicht an den externen Speicher übertragen werden,
als Reaktion auf einen Benutzerbefehl zum Wiederherstellen des Inhaltselements, Empfangen der ersten Datenkomponente von dem externen Speicher durch die Kommunikationsschnittstelle,
wobei die erste Datenkomponente, die an den externen Speicher übertragen wird, nicht zulässt, dass das Inhaltselement normal ohne die zweite Datenkomponente reproduziert wird,
wobei die Steuerung für Folgendes konfiguriert ist:
als Reaktion darauf, dass das Inhaltselement ein Dokumentinhaltselement ist, Speichern von Text des Dokumentinhaltselements als die zweite Datenkomponente in dem internen Speicher und Übertragen von Dokumentlayoutinformationen des Dokumentinhaltselements an den externen Speicher als die erste Datenkomponente,
als Reaktion auf eine Benutzermanipulation, um das eingegebene Dokumentinhaltselement anzuzeigen, Anfordern, dass der externe Speicher die Dokumentlayoutinformationen des Dokumentinhaltselements überträgt,
als Reaktion darauf, dass die Dokumentlayoutinformationen des Dokumentinhaltselements von dem externen Speicher gemäß der Anforderung empfangen werden, Anzeigen des Dokumentinhaltselements durch die Anzeige unter Verwendung des Textes des Dokumentinhaltselements, der in dem internen Speicher gespeichert ist, und der Dokumentlayoutinformationen des Dokumentinhaltselements, und
als Reaktion auf eine Benutzermanipulation, um ein Layout des eingegebenen Dokumentinhaltselements zu ändern, Übertragen von geänderten Dokumentlayoutinformationen an den externen Speicher, um geändertes Layout zu speichern und um die Dokumentlayoutinformationen des Dokumentinhaltselements aus dem externen Speicher zu löschen.

2. Inhaltsverarbeitungsverfahren einer Inhaltsverarbeitungsvorrichtung (100), wobei das Inhaltsverarbeitungsverfahren Folgendes umfasst:
Übertragen, an einen externen Speicher (10), einer ersten Datenkomponente aus einer Vielzahl von Datenkomponenten, die ein Inhaltselement bilden;
Speichern, in einem internen Speicher (120) der Inhaltsverarbeitungsvorrichtung, einer zweiten Datenkomponente aus Datenkomponenten aus der Vielzahl von Datenkomponenten, die nicht an den externen Speicher übertragen werden; und
als Reaktion auf einen Benutzerbefehl zum Wiederherstellen des Inhaltselements, Empfangen der ersten Datenkomponente von dem externen Speicher,
wobei die erste Datenkomponente, die an den externen Speicher übertragen wird, nicht zulässt, dass das Inhaltselement normal ohne die zweite Datenkomponente reproduziert wird,
wobei das Inhaltselement ein Dokumentinhaltselement ist,
wobei das Speichern das Speichern von Text des Dokumentinhaltselements als die zweite Datenkomponente in dem internen Speicher umfasst,
wobei das Übertragen das Übertragen von Dokumentlayoutinformationen des Dokumentinhaltselements an den externen Speicher als die erste Datenkomponente umfasst,
wobei das Verfahren ferner Folgendes umfasst:
als Reaktion auf eine Benutzermanipulation, um das eingegebene Dokumentinhaltselement anzuzeigen, Anfordern, dass der externe Speicher die Dokumentlayoutinformationen des Dokumentinhaltselements überträgt,
als Reaktion darauf, dass die Dokumentlayoutinformationen des Dokumentinhaltselements von dem externen Speicher gemäß der Anforderung empfangen werden, Anzeigen des Dokumentinhaltselements durch die Anzeige unter Verwendung des Textes des Dokumentinhaltselements, der in dem internen Speicher gespeichert ist, und der Dokumentlayoutinformationen des Dokumentinhaltselements, und
als Reaktion auf eine Benutzermanipulation, um ein Layout des eingegebenen Dokumentinhaltselements zu ändern, Übertragen von geänderten Dokumentlayoutinformationen an den externen Speicher, um geändertes Layout zu speichern und um die Dokumentlayoutinformationen des Dokumentinhaltselements aus dem externen Speicher zu löschen.

## Revendications

1. Appareil de traitement de contenu (100) comprenant :
une interface de communication (110) configurée pour communiquer avec un dispositif de stockage externe (10) ; et
un dispositif de stockage interne (120) ;
un dispositif d'affichage (140) ;
un dispositif de commande (130) configuré pour :
transmettre, au dispositif de stockage externe par l'intermédiaire de l'interface de communication, une première composante de données parmi une pluralité de composantes de données constituant un contenu,
stocker dans le dispositif de stockage interne (120) une seconde composante de données parmi les composantes de données de la pluralité de composantes de données qui ne sont pas transmises au dispositif de stockage externe,
en réponse à une commande utilisateur pour restaurer l'élément de contenu, recevoir la première composante de données en provenance du dispositif de stockage externe par l'intermédiaire de l'interface de communication,
ladite première composante de données transmise au dispositif de stockage externe ne permettant pas à l'élément de contenu d'être reproduit normalement sans la seconde composante de données,
ledit dispositif de commande étant configuré pour :
en réponse à l'élément de contenu qui est un élément de contenu de document, stocker le texte de l'élément de contenu de document en tant que seconde composante de données dans le dispositif de stockage interne, et transmettre des informations de mise en page de document de l'élément de contenu de document au dispositif de stockage externe en tant que première composante de données,
en réponse à une manipulation d'utilisateur pour visualiser l'élément de contenu de document entré, demander au dispositif de stockage externe de transmettre les informations de mise en page de document de l'élément de contenu de document,
en réponse aux informations de mise en page de document de l'élément de contenu de document reçues en provenance du dispositif de stockage externe selon la demande, afficher l'élément de contenu de document par l'intermédiaire du dispositif d'affichage à l'aide du texte de l'élément de contenu de document stocké dans le dispositif de stockage interne et les informations de mise en page de document de l'élément de contenu de document, et
en réponse à une manipulation d'utilisateur pour modifier une mise en page de l'élément de contenu de document entré, transmettre des informations de mise en page de document modifiées au dispositif de stockage externe pour stocker une mise en page modifiée et supprimer les informations de mise en page de document de l'élément de contenu de document du dispositif de stockage externe.

2. Procédé de traitement de contenu d'un appareil de traitement de contenu (100), le procédé de traitement de contenu comprenant :
la transmission, à un dispositif de stockage externe (10), d'une première composante de données parmi une pluralité de composantes de données constituant un élément de contenu ;
le stockage, dans un dispositif de stockage interne (120) de l'appareil de traitement de contenu, d'une seconde composante de données parmi les composantes de données de la pluralité de composantes de données qui ne sont pas transmises au dispositif de stockage externe ; et
en réponse à une commande utilisateur pour restaurer l'élément de contenu, la réception de la première composante de données en provenance du dispositif de stockage externe,
ladite première composante de données transmise au dispositif de stockage externe ne permettant pas à l'élément de contenu d'être reproduit normalement sans la seconde composante de données,
ledit élément de contenu étant un élément de contenu de document,
ledit stockage comprenant le stockage du texte de l'élément de contenu de document en tant que seconde composante de données dans le dispositif de stockage interne,
ladite transmission comprenant la transmission d'informations de mise en page de document de l'élément de contenu de document au dispositif de stockage externe en tant que première composante de données,
ledit procédé comprenant en outre :
en réponse à une manipulation d'utilisateur pour visualiser l'élément de contenu de document entré, la demande au dispositif de stockage externe de transmettre les informations de mise en page de document de l'élément de contenu de document,
en réponse aux informations de mise en page de document de l'élément de contenu de document reçues en provenance du dispositif de stockage externe selon la demande, l'affichage de l'élément de contenu de document par l'intermédiaire du dispositif d'affichage à l'aide du texte de l'élément de contenu de document stocké dans le dispositif de stockage interne et des informations de mise en page de document de l'élément de contenu du document, et
en réponse à une manipulation d'utilisateur pour modifier une mise en page de l'élément de contenu de document entré, la transmission des informations de mise en page de document modifiées au dispositif de stockage externe pour stocker une mise en page modifiée et supprimer les informations de mise en page de document de l'élément de contenu de document du dispositif de stockage externe.
